# EUROPEAN PATENT SPECIFICATION

(11) **EP 3 915 814 B1**
(45) Date of publication and mention of the grant of the patent: **27.09.2023**
(21) Application number: 20901192.3
(22) Date of filing: 16.10.2020
(51) Int. Cl.: B60H 1/00, B60L 58/24

(54) **VEHICLE THERMAL MANAGEMENT SYSTEM AND VEHICLE**
FAHRZEUGWÄRMEVERWALTUNGSSYSTEM UND FAHRZEUG
SYSTÈME DE GESTION THERMIQUE DE VÉHICULE, ET VÉHICULE

(30) Priority: 18.12.2019 CN 201911309782
(43) Date of publication of application: 01.12.2021
(73) Proprietor: Guangdong Xiaopeng Motors Technology Co., Ltd., Sino-Singapore Knowledge City, Huangpu District Guangzhou, Guangdong 510555 (CN)
(72) Inventor: LV, Yang, Guangzhou, Guangdong 510555 (CN); LIANG, Tongsheng, Guangzhou, Guangdong 510555 (CN); WANG, Wei, Guangzhou, Guangdong 510555 (CN); ZHANG, Dongbin, Guangzhou, Guangdong 510555 (CN)
(74) Representative: Ran, Handong
(86) International application number: PCT/CN2020/121584
(87) International publication number: WO 2021/120815

(56) References cited:
- EP-A1- 2 891 569
- CN-A- 108 482 067
- CN-A- 110 281 735
- CN-A- 110 315 931
- CN-A- 110 481 275
- CN-A- 110 949 093
- CN-U- 208 232 842
- GB-A- 2 557 361
- KR-A- 20190 020 353
- US-A1- 2015 217 622

## Description

### FIELD

The present invention relates to the technical field of thermal management, and more specifically, to a thermal management system adapted to be applied in a vehicle, and the vehicle

### BACKGROUND

At present, an electric vehicle thermal management system includes three circuits, i.e., a warm air heating circuit, an electric-driven cooling circuit, and a battery thermostatic circuit. These three circuits generally use liquid circuit systems that are independent of each other. Since each circuit requires one expansion tank for coolant-filling and air-exhausting, existing vehicles need to be equipped with three expansion tanks. At the same time, three filling devices are required to be provided on a vehicle production line to simultaneously fill the three expansion tanks with coolant, which causes a high production cost of the vehicle, a low filling efficiency, complicated water channels on the vehicle, difficulties and limitations in a water channel layout, and low efficiency in after-sales maintenance of the vehicle. CN110481275A discloses an integrated expansion kettle for an electric vehicle, which reduces the number of parts, optimizes the connection of the pipeline, helps to keep the front cabin clean, and facilitates the lightweight design of the electric vehicle. EP2891569A1 discloses a thermal management system for a vehicle, which can suppress formation of a local loop circuit by a reserve tank, while switching a heat medium circulating through the temperature adjustment target device. US20150217622A1 discloses a thermal management system for a vehicle, in which the heat media circulating through the numerous flow paths can be switched with a simple structure in which the numerous flow paths are connected in parallel between the switching portion and the communication flow path.

### SUMMARY

Embodiments of the present invention provide a thermal management system adapted to be applied in a vehicle, and the vehicle.

The thermal management system according to claim 1 of the present invention includes a cooling circuit, a thermostatic circuit, a heating circuit, and an expansion tank. The cooling circuit, the thermostatic circuit, and the heating circuit. The thermal management system further includes a first reversing valve connected to the expansion tank, the cooling circuit, and the thermostatic circuit. The first reversing valve is configured to connect the cooling circuit and the thermostatic circuit in series in a filling and exhausting mode of a vehicle. The thermal management system further includes a first liquid-gas separator connected to the expansion tank, the reversing valve, and the cooling circuit. The first liquid-gas separator is configured to separate liquid and air in the cooling circuit and thermostatic circuit and introduce the separated gas into the expansion tank. When the cooling circuit and the thermostatic circuit are connected in series, the cooling circuit is configured to absorb heat of a target cooling element using the liquid, and the thermostatic circuit is configured to heat the target thermostatic element using the liquid with the absorbed heat of the target cooling element. A heat dissipating device, a second reversing valve, and a first pump are connected in the cooling circuit. The first pump is configured to drive the liquid to flow in the cooling circuit; the heat dissipating device is connected to the second reversing valve, and the heat dissipating device is configured to dissipate heat of the liquid; and the second reversing valve is configured to keep the heat dissipating device from being connected into the cooling circuit when the cooling circuit and the thermostatic circuit are connected in series.

In the thermal management system according to claim 1, the cooling circuit, the thermostatic circuit, and the heating circuit are connected by using one expansion tank, thereby reducing the cost of the vehicle, improving the coolant-filling efficiency of the expansion tank and production takt on the vehicle production line, and improving the after-sales maintenance efficiency of the vehicle.

According to embodiments of the present invention, the vehicle includes the target cooling element connected in the cooling circuit and a target thermostatic element connected in the thermostatic circuit.

According to embodiments of the present invention, the target cooling element includes a vehicle motor drive system connected in the cooling circuit, and the target thermostatic element includes a vehicle power battery connected in the thermostatic circuit.

According to embodiments of the present invention, the thermal management system includes an air conditioning circuit. The air conditioning circuit is configured to exchange heat with the thermostatic circuit.

According to embodiments of the present invention, a heat exchange device and a second pump are connected in the thermostatic circuit. The second pump is configured to drive the liquid to flow in the thermostatic circuit, and the heat exchange device is configured to exchange heat with the air conditioning circuit.

According to embodiments of the present invention, the thermal management system includes a cooling water supply pipe and a cooling air-exhaust pipe. The cooling water supply pipe connects the expansion tank with the first liquid-gas separator, the cooling air-exhaust pipe connects the expansion tank with the first liquid-gas separator, the cooling water supply pipe is configured to supply the liquid to the cooling circuit, and the cooling air-exhaust pipe is configured to introduce the air in the cooling circuit into the expansion tank.

According to embodiments of the present invention, the thermostatic circuit includes a thermostatic water supply pipe connecting the expansion tank with the thermostatic circuit. The thermostatic water supply pipe is configured to provide the liquid for the thermostatic circuit, and the cooling air-exhaust pipe is configured to introduce the air in the cooling circuit and thermostatic circuit into the expansion tank when the cooling circuit and the thermostatic circuit are connected in series.

According to embodiments of the present invention, the thermal management system includes a second liquid-gas separator connecting the heating circuit with the expansion tank. The second liquid-gas separator is configured to separate liquid and air in the heating circuit and introduce the separated gas into the expansion tank.

According to embodiments of the present invention, the heating circuit includes a heating water supply pipe and a heating air-exhaust pipe. The heating water supply pipe connects the expansion tank with the second liquid-gas separator and is configured to supply the liquid to the heating circuit, and the heating air-exhaust pipe connects the expansion tank with the second liquid-gas separator and is configured to introduce the air in the heating circuit into the expansion tank.

An embodiment of the present invention according to claim 10 provides a vehicle including a vehicle body and the thermal management system according to any one of the above embodiments. The thermal management system is installed on the vehicle body.

In the vehicle of the above embodiments, the cooling circuit, the thermostatic circuit, and the heating circuit are connected by using one expansion tank, thereby reducing the cost of the vehicle, improving a coolant-filling efficiency of the expansion tank and a production takt on the vehicle production line, and improving the after-sales maintenance efficiency of the vehicle.

The additional aspects and advantages of the embodiments of the present invention will be partly given in the following description, and part of them will become apparent from the following description or can be understood through the practice of the embodiments of the present invention.

### BRIEF DESCRIPTION OF DRAWINGS

The above and/or additional aspects and advantages of the present invention will become apparent and comprehensible through the description of the embodiments in conjunction with the following drawings, in which:
FIG. 1 is a schematic diagram of a flow path connection of a thermal management system adapted to be applied in a vehicle according to an embodiment of the present invention.
FIG. 2 is a schematic diagram of another flow path connection of a thermal management system adapted to be applied in a vehicle according to an embodiment of the present invention.
FIG. 3 is a schematic diagram of yet another flow path connection of a thermal management system adapted to be applied in a vehicle according to an embodiment of the present invention.
FIG. 4 is a schematic structural diagram of a vehicle according to an embodiment of the present invention.

### Symbols of main components:

Thermal management system 100, cooling circuit 10, target cooling element 12, heat dissipating device 14, first pump 16, second reversing valve 18, fifth valve port 182, sixth valve port 184, seventh valve port 186, thermostatic circuit 20, target thermostatic element 22, heat exchange device 24, second pump 26, heating circuit 30, target heating element 32, heating device 34, third pump 36, expansion tank 40, first reversing valve 50, first valve port 52, second valve port 54, third valve port 56, fourth valve port 58, first liquid-gas separator 60, air conditioning circuit 80, second liquid-gas separator 90, cooling water supply pipe 110, cooling air-exhaust pipe 120, thermostatic water supply pipe 130, heating water supply pipe 140, heating air-exhaust pipe 150, vehicle 1000, and vehicle body 200.

### DESCRIPTION OF EMBODIMENTS

The embodiments of the present invention are described in detail below. Examples of the embodiments are illustrated in the accompanying drawings, where the same or similar reference numbers indicate the same or similar elements or elements with the same or similar functions throughout the context. The embodiments described below with reference to the drawings are illustrative and are intended to explain the present invention, but should not be understood as limitations of the present invention.

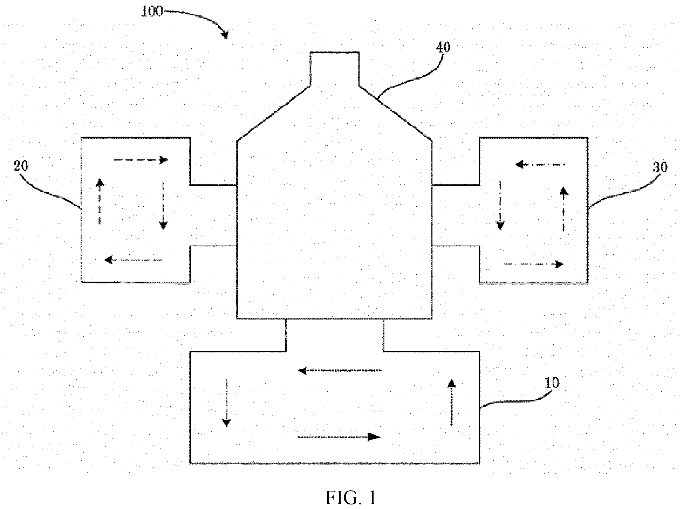

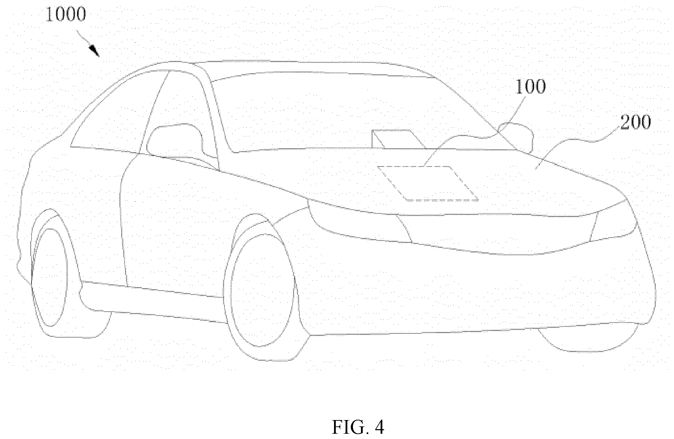

Referring to FIG. 1, a thermal management system 100 for a vehicle 1000 according to an embodiment of the present invention can be applied in the vehicle 1000 (illustrated in FIG. 4) according to an embodiment of the present disclosure. The thermal management system 100 includes a cooling circuit 10, a thermostatic circuit 20, a heating circuit 30, and an expansion tank 40. The cooling circuit 10, the thermostatic circuit 20 and the heating circuit 30 are all connected to the expansion tank 40. The expansion tank 40 is configured for liquid-filling and air-exhausting of the cooling circuit 10, the thermostatic circuit 20, and the heating circuit 30.

In the thermal management system 100 for the vehicle 1000 of the above embodiment, the cooling circuit 10, the thermostatic circuit 20, and the heating circuit 30 are connected by using one expansion tank 40, thereby reducing the cost of the vehicle 1000, improving the coolant-filling efficiency of the expansion tank 40 and the production takt on the production line of the vehicle 1000, improving the flexibility of the pipeline arrangement of the thermal management system 100 for the vehicle 1000, and improving the after-sales maintenance efficiency of the vehicle 1000.

In this embodiment, the dotted arrows in FIG. 1 to FIG. 3 indicate flow directions of the liquid in the cooling circuit 10, thermostatic circuit 20, and heating circuit 30, respectively. The solid arrows in FIG. 1 to FIG. 3 respectively indicate directions in which the liquid is filled from the expansion tank to the cooling circuit 10, thermostatic circuit 20, and heating circuit 30, and directions in which the air is introduced from the cooling circuit 10, thermostatic circuit 20, and heating circuit 30 to the expansion tank 40.

In this embodiment, the vehicle 1000 may be a hybrid vehicle or an electric vehicle. That is, the thermal management system 100 for the vehicle 1000 in this embodiment of the present invention may be used for a hybrid vehicle or an electric vehicle. The thermal management system 100 for the vehicle 1000 can be applied to a series-parallel hybrid system of three circuits, a parallel system of three circuits, a series-parallel hybrid system of two circuits, and a parallel system of two circuits.

In this embodiment, the cooling circuit 10 can be configured to cool a motor drive system of the vehicle 1000. The thermostat circuit 20 can be configured to maintain a temperature of a power battery of the vehicle 1000. The heating circuit 30 may be configured to provide heat to a Heating Ventilation and Air Conditioning (HVAC) system of the vehicle 1000.

The expansion tank 40 of this embodiment is a three-in-one integrated expansion tank 40, which is an important component of the thermal management system 100 for the vehicle 1000. The air-exhausting and liquid-filling of the cooling circuit 10, thermostatic circuit 20, and heating circuit 30 are all completed through the three-in-one integrated expansion tank 40. When the vehicle 1000 starts, the liquid in the cooling circuit 10, thermostatic circuit 20, and heating circuit 30 circulates continuously and flows through the expansion tank 40 on the way. If a pressure of the cooling circuit 10, thermostatic circuit 20, or heating circuit 30 is too high or the amount of the liquid therein is too great, the excess gas and liquid will flow out of a bypass channel of the expansion tank 40 to prevent over-pressure from occurring in the thermal management system 100 for the vehicle 1000, which may cause pipe burst in the pipeline of the circuits.

In this embodiment, the liquid to be filled into the expansion tank 40 includes water or other coolants for cooling.

In this embodiment, the thermal management system 100 uses one expansion tank 40 to connect the cooling circuit 10, thermostatic circuit 20, and heating circuit 30. Compared with the related art in which three expansion tanks 40 are connected to the cooling circuit 10, the thermostatic circuit 20, and the heating circuit 30, respectively, the manufacturing cost of the vehicle 1000 is reduced. In addition, since the cooling circuit 10, the thermostatic circuit 20, and the heating circuit 30 are connected through only one expansion tank 40 in this embodiment, only one filling device is needed when filling the expansion tank 40 with the liquid, which can improve the liquid-filling efficiency of the expansion tank 40 and the production takt on the production line of the vehicle 1000. Further, when the vehicle 1000 is undergoing the after-sales maintenance, the liquid-filling efficiency of one expansion tank 40 is high, and the operation is convenient.

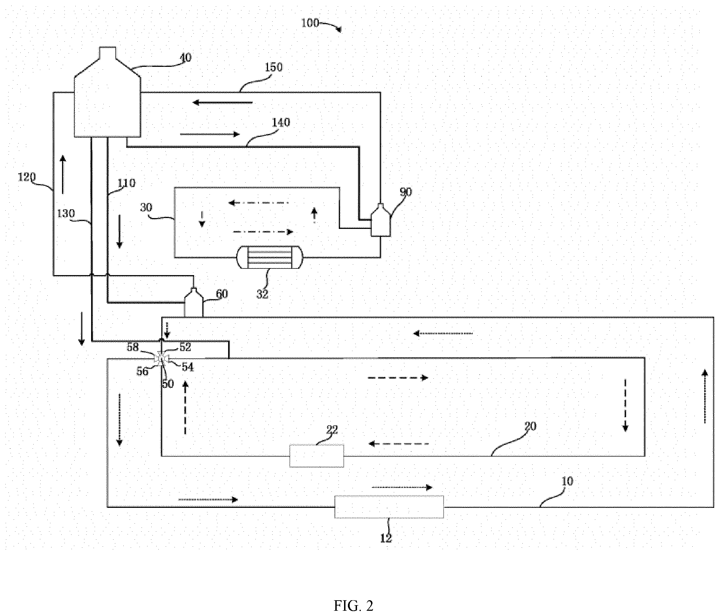

Referring to FIG. 2, in this embodiment, the thermal management system 100 for the vehicle 1000 includes a first reversing valve 50, the first reversing valve 50 is connected to the expansion tank 40, the cooling circuit 10 and the thermostatic circuit 20. When the vehicle 1000 is in a filling and exhausting mode, the first reversing valve 50 is configured to connect the cooling circuit 10 to the thermostatic circuit 20 in series. In this way, when the vehicle 1000 is in the filling and exhausting mode, the cooling circuit 10 and the thermostatic circuit 20 are connected in series through the first reversing valve 50, thereby greatly improving the liquid-filling and air-exhausting efficiency of the thermal management system 100.

Specifically, when the vehicle 1000 is in the filling and exhausting mode, a motor waste heat recovery mode, and a battery cooling mode, the first reversing valve 50 is required to make the cooling circuit 10 and the thermostatic circuit 20 in a series connection state.

The filling and exhausting mode of this embodiment can be understood as: after the user activates the one-key filling and exhausting mode of the vehicle 1000, the cooling circuit 10, the thermostatic circuit 20, and the heating circuit 30 are all activated, and the first reversing valve 50 performs a position adjustment, so as to connect the cooling circuit 10 and the thermostatic circuit 20 in series, on this basis of which, the expansion tank 40 is filled with the liquid.

In this embodiment, the first reversing valve 50 may be a four-way valve. The first reversing valve 50 includes a first valve port 52, a second valve port 54, a third valve port 56, and a fourth valve port 58. The first valve port 52 and the fourth valve port 58 are connected to the cooling circuit 10. The second valve port 54 and the third valve port 56 are connected to the thermostatic circuit 20. When the cooling circuit 10 and the thermostatic circuit 20 are connected in series, the liquid passing through the first valve port 52 from the cooling circuit 10 enters the thermostatic circuit 20 through the second valve port 54, and the liquid passing through the third valve port 56 from the thermostatic circuit 20 enters the cooling circuit 10 through the fourth valve port 58.

In other embodiments, the first reversing valve 50 can be used to connect the cooling circuit 10 and the thermostatic circuit 20 in parallel. When the cooling circuit 10 and the thermostatic circuit 20 are connected in parallel, the liquid passing through the first valve port 52 from the cooling circuit 10 enters the cooling circuit 10 through the fourth valve port 58. The liquid passing through the third valve port 56 from the thermostatic circuit 20 enters the thermostatic circuit 20 through the second valve port 54.

In this embodiment, referring to FIG. 2, the thermal management system 100 for the vehicle 1000 includes a first liquid-gas separator 60, and the first liquid-gas separator 60 is connected to the expansion tank 40, the first reversing valve 50, and the cooling circuit 10. The first liquid-gas separator 60 is configured to separate liquid and air in the cooling circuit 10 and thermostatic circuit 20 and introduce the separated gas into the expansion tank 40. In this way, it is beneficial to a quick introduction of air in the cooling circuit 10 and thermostatic circuit 20 into the expansion tank 40, and improving the flexibility of the management layout of the thermal management system 100 for the vehicle 1000.

Specifically, the first liquid-gas separator 60 is an element that can realize liquid-gas separation. The first liquid-gas separator 60 is in communication with the cooling circuit 10. When the cooling circuit 10 and the thermostatic circuit 20 are connected in series, the liquid and air in the cooling circuit 10 and thermostatic circuit 20 are in communication with the first liquid-gas separator 60, the first liquid-gas separator 60 can separate the liquid and air in the cooling circuit 10 and thermostatic circuit 20, and the separated gas is introduced into the expansion tank 40 to balance the pressure of the cooling circuit 10 and the thermostatic circuit 20, while the liquid continuously circulates in the cooling circuit 10 and thermostatic circuit 20.

In this embodiment, referring to FIG. 2, the vehicle 1000 includes a target cooling element 12 connected in the cooling circuit 10 and a target thermostatic element 22 connected in the thermostatic circuit 20. When the cooling circuit 10 and the thermostatic circuit 20 are connected in series, the cooling circuit 10 is configured to absorb the heat of the target cooling element 12 with the liquid, and the thermostatic circuit 20 is configured to heat the target thermostatic element 22 with the liquid the absorbed heat of the target cooling element 12. In this way, the waste heat in the cooling circuit 10 can be recovered and provided to the thermostatic circuit 20 for use.

Specifically, in this embodiment, the target cooling element 12 includes a motor drive system of the vehicle 1000 connected in the cooling circuit 10. The motor drive system of the vehicle 1000 is configured to provide power for the operation of the vehicle 1000, and the target thermostatic element includes a power battery of the vehicle 1000 connected in the thermostatic circuit 20. The power battery of the vehicle 1000 is configured to provide power to the vehicle 1000.

When the cooling circuit 10 and the thermostatic circuit 20 are connected in series, the liquid in the cooling circuit 10 can absorb heat of the target cooling element 12, and the heat can be transferred to the thermostatic circuit 20 and supplied to the power battery of the vehicle 1000 in the thermostatic circuit 20.

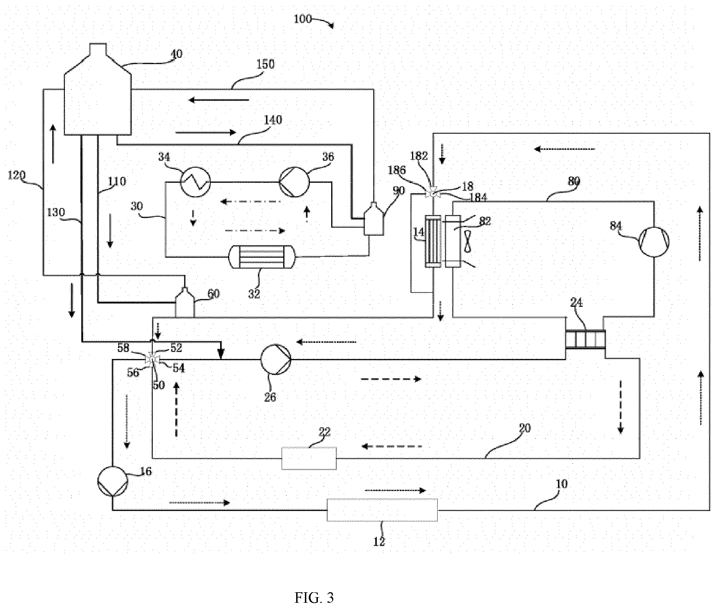

In this embodiment, referring to FIG. 3, a heat dissipating device 14 and a first pump 16 are connected in the cooling circuit 10, and the heat dissipating device 14, a second reversing valve 18 and the first pump 16 are connected in the cooling circuit 10. The first pump 16 is configured to drive the liquid to flow in the cooling circuit 10, the heat dissipating device 14 is connected to the second reversing valve 18, and the heat dissipating device 14 is configured to dissipate the heat of the liquid. When the cooling circuit 10 and the thermostatic circuit 20 are connected in series, the second reversing valve 18 is configured to disconnect the heat dissipating device 14 from the cooling circuit 10.

Specifically, the first pump 16 can accelerate the flow of the liquid in the cooling circuit 10. The heat dissipating device 14 may be a heat dissipation fan or other components with a heat dissipation function.

The second reversing valve 18 includes a fifth valve port 182, a sixth valve port 184, and a seventh valve port 186. In one embodiment, the liquid in the cooling circuit 10 can flow from the fifth valve port 182 to the seventh valve port 186, and the heat dissipating device 14 is not connected into the cooling circuit 10. In another embodiment, the liquid in the cooling circuit 10 can flow from the fifth valve port 182 to the sixth valve port 184 and to the heat dissipating device 14.

In this embodiment, referring to FIG. 3, a heat exchange device 24 and a second pump 26 are connected in the thermostatic circuit 20. The second pump 26 is configured to drive the liquid to flow in the thermostat circuit 20, and the heat exchange device 24 can play a role in heat exchange.

In this embodiment, referring to FIG. 3, the first pump 16 drives the liquid to flow in the cooling circuit 10. The second pump 26 drives the liquid to flow in the thermostatic circuit 20. When the cooling circuit 10 and the thermostatic circuit 20 are connected in series, the liquid in the cooling circuit 10 and the liquid in the thermostatic circuit 20 flow in a direction of: target cooling element 12→fifth valve port 182→seventh valve port 186→first liquid-gas separator 60→first valve port 52→second valve port 54→second pump 26→heat exchange device 24→target thermostatic element 22→third valve port 56→fourth valve port 58→first pump 16→target cooling element 12.

When the cooling circuit 10 and the thermostatic circuit 20 are connected in parallel, the liquid in the cooling circuit 10 flows in a direction of: target cooling element 12→fifth valve port 182→sixth valve port 184→first liquid-gas separator 60→first valve port 52→fourth valve port 58→first pump 16→target cooling element 12. The liquid in the thermostatic circuit 20 flows in a direction of: target thermostatic element 22→third valve port 56→first valve port 52 -second pump 26→heat exchange device 24→target thermostatic element 22.

In this embodiment, referring to FIG. 3, the thermal management system 100 includes an air conditioning circuit 80 configured to exchange heat with the thermostatic circuit 20. In this way, through the heat exchange between the air conditioning circuit 80 and the thermostatic circuit 20, the temperature of the power battery of the vehicle 1000 in the thermostatic circuit 20 can be maintained within a preset range.

Specifically, the air conditioning circuit 80 includes a cooling mode and a heating mode. When the temperature of the power battery of the vehicle 1000 is relatively high, the cooling mode of the air conditioning circuit 80 is activated. The air conditioning circuit 80 includes a condensing device 82 and a compression device 84. The condensing device 82 is connected to the compression device 84. The condensing device 82 can be configured to reduce a temperature of the air conditioning circuit 80. The compression device 84 functions to compress and drive a refrigerant in the air conditioning circuit 80. The heat exchange device 24 exchanges heat with the air conditioning circuit 80 to lower the temperature of the power battery of the vehicle 1000. When the temperature of the power battery of the vehicle 1000 is relatively low, the heating mode of the air conditioning circuit 80 is activated, and the heat exchange device 24 exchanges heat with the air conditioning circuit 80, to increase the temperature of the power battery of the vehicle 1000.

In this embodiment, referring to FIG. 1 to FIG. 3, the thermal management system 100 includes a cooling water supply pipe 110 and a cooling air-exhaust pipe 120. The cooling water supply pipe 110 connects the expansion tank 40 with the first liquid-gas separator 60, and the cooling air-exhaust pipe 120 connects the expansion tank 40 with the first liquid-gas separator 60. The cooling water supply pipe 110 is configured to provide liquid to the cooling circuit 10, and the cooling air-exhaust pipe 120 is configured to introduce the air in the cooling circuit 10 into the expansion tank 40. In this way, the liquid can be quickly supplied from the expansion tank 40 to the cooling circuit 10 through the cooling water supply pipe 110, and the air in the cooling circuit 10 can be quickly introduced into the expansion tank 40 through the cooling air-exhaust pipe 120.

Specifically, in this embodiment, both the cooling water supply pipe 110 and the cooling air-exhaust pipe 120 are connected to the first liquid-gas separator 60. Depending on actual needs, the number of cooling water supply pipes 110 can be one or more, and the number of cooling air-exhaust pipes 120 can also be one or more.

In this embodiment, referring to FIG. 1 to FIG. 3, the thermostatic circuit 20 includes a thermostatic water supply pipe 130. The thermostatic water supply pipe 130 connects the expansion tank 40 with the thermostatic circuit 20, and is configured to provide liquid to the thermostatic circuit 20. When the cooling circuit 10 and the thermostatic circuit 20 are connected in series, the cooling air-exhaust pipe 120 is configured to introduce the air in the cooling circuit 10 and the air in the thermostatic circuit 20 into the expansion tank 40.

Specifically, the thermostatic water supply pipe 130 is connected to the thermostatic circuit 20, and the liquid from the expansion tank 40 can be filled into the thermostatic circuit 20 through the thermostatic water supply pipe 130. The number of thermostatic water supply pipes 130 can be one or more, depending on actual needs. In this embodiment, when the filling and exhausting mode is activated, the cooling circuit 10 and the thermostatic circuit 20 are switched to be connected in series, that is, the cooling circuit 10 and the thermostatic circuit 20 are in communication with each other at this time. The cooling air-exhaust pipe 120 can simultaneously introduce the air in the cooling circuit 10 and thermostatic circuit 20 into the expansion tank 40. The liquid in the expansion tank 40 can be filled to the cooling circuit 10 through the cooling water supply pipe 110 and to the thermostatic circuit 20 through the thermostatic water supply pipe 130. In addition, in this embodiment, when the cooling circuit 10 and the thermostatic circuit 20 are connected in series, if an air-exhaust pipe is additionally provided in the thermostatic circuit 20, a small liquid circulation may be formed in the thermostatic circuit 20, and the small liquid circulation may result in an increase in energy consumption of the vehicle 1000 and a loss in liquid flow. Therefore, in the present embodiment, instead of additionally providing an air-exhaust pipe in the thermostat circuit 20, the thermostat circuit 20 and the cooling circuit 10 share the cooling air-exhaust pipe 120 for air-exhausting.

In this embodiment, referring to FIG. 3, the thermal management system 100 for the vehicle 1000 includes a second liquid-gas separator 90, the second liquid-gas separator 90 connects the heating circuit 30 with the expansion tank 40, and the second liquid-gas separator 90 is configured to separate the liquid and air in the heating circuit 30 and introduce the separated gas into the expansion tank 40. In this way, this facilitates a rapid introduction of the air from the heating circuit 30 into the expansion tank 40, and can improve the flexibility of the management layout of the thermal management system 100 for the vehicle 1000.

Specifically, the heating circuit 30 includes a target heating element 32, a heating device 34, and a third pump 36. The liquid in the heating circuit 30 flows in a direction of: target heating element 32→heating device 34→third pump 36. The target heating element 32 includes a warm air core, which can provide warm air to the vehicle 1000 and the like. In this embodiment, the heating device 34 may be a positive temperature coefficient (PTC) heating device 34 element. The PTC heating device 34 element can provide heat to the heating circuit 30. The third pump 36 is configured to drive the liquid to flow in the heating circuit 30.

In this embodiment, the second liquid-gas separator 90 can separate the liquid and air in the heating circuit 30, then the separated gas is introduced into the expansion tank 40 to balance the pressure of the heating circuit 30, and the liquid continuously circulates in the heating circuit 30 and the thermostatic circuit 20 .

In this embodiment, referring to FIG. 1 to FIG. 3, the heating circuit 30 includes a heating water supply pipe 140 and a heating air-exhaust pipe 150. The heating water supply pipe 140 connects the expansion tank 40 with the second liquid-gas separator 90, and is configured to provide a liquid to the heating circuit 30. The heating air-exhaust pipe 150 connects the expansion tank 40 with the second liquid-gas separator 90 and is configured to introduce the air in the heating circuit 30 into the expansion tank 40. In this way, the liquid can be quickly supplied from the expansion tank 40 to the heating circuit 30 through the heating water supply pipe 140, and the air in the heating circuit 30 can be quickly introduced into the expansion tank 40 through the heating air-exhaust pipe 150.

Specifically, in this embodiment, both the heating water supply pipe 140 and the heating air-exhaust pipe 150 are connected to the second liquid-gas separator 90. Depending on actual needs, the number of heating water supply pipes 140 can be one or more, and the number of heating air-exhaust pipes 150 can also be one or more.

In summary, when the filling and exhausting mode is activated, the first reversing valve 50 is configured to switch the cooling circuit 10 and the thermostatic circuit 20 into a series connection state, that is, the cooling circuit 10 and the thermostatic circuit 20 form a large series circuit. The cooling water supply pipe 110, the thermostatic water supply pipe 130, and the cooling air-exhaust pipe 120 are connected in the large series circuit. This arrangement can effectively ensure the normal coolant-filling and air-exhausting. In addition, since one first liquid-gas separator 60 is connected in the large series circuit composed of the cooling circuit 10 and the thermostatic circuit 20, during the filling and exhausting process, the first liquid-gas separator 60 can effectively discharge the air in the thermal management system 100 for the vehicle 1000 into the three-in-one integrated expansion tank 40 of this embodiment, thereby improving the filling and exhausting efficiency. Furthermore, the large series circuit formed by the cooling circuit 10 and the thermostatic circuit 20 constitutes a parallel circuit together with the heating circuit 30. The heating circuit 30 includes the heating water supply pipe 140 and the heating air-exhaust pipe 150, which can effectively ensure the normal coolant-filling and air-exhausting. At the same time, one second liquid-gas separator 90 is connected in the heating circuit 30, and during the filling and exhausting process, the second liquid-gas separator 90 can effectively discharge the air in the thermal management system 100 for the vehicle 1000 quickly to the three-in-one integrated expansion tank 40, thereby improving the filling and exhausting efficiency. In this embodiment, the filling and exhausting of each of the cooling circuit 10, the thermostatic circuit 20, and the heating circuit 30 is performed through the three-in-one integrated expansion tank 40. It has been verified through experiments that, when the filling and exhausting mode is activated, the first pump 16, the second pump 26, and the third pump 36 are all turned on, the filling and exhausting of a system (with a water capacity of about 20 liters) constituted by the cooling circuit 10, the thermostatic circuit 20, and the heating circuit 30 can be finished within 3 to 5 minutes.

In other embodiments, the first reversing valve 50 is configured to switch the cooling circuit 10 and the thermostatic circuit 20 into a parallel connection state. In other words, at this time, the cooling circuit 10, the thermostatic circuit 20, and the heating circuit 30 are connected in parallel.

Referring to FIG. 4, a vehicle 1000 according to an embodiment of the present invention includes a vehicle body 200 and the thermal management system 100 for the vehicle 1000 of any of the above embodiments, and the thermal management system 100 for the vehicle 1000 is installed on the vehicle body 200. Specifically, the vehicle 1000 may be a hybrid vehicle 1000 or an electric vehicle 1000, which is not specifically limited.

In the vehicle 1000 of the embodiment of the present invention, the cooling circuit 10, the thermostatic circuit 20, and the heating circuit 30 are connected by using one expansion tank 40, which can reduce the cost of the vehicle 1000, improve the coolant-filling efficiency of the expansion tank 40 and production takt on the production line of the vehicle 1000, improve the flexibility of the pipeline layout of the thermal management system 100 for the vehicle 1000, and improve the after-sales maintenance efficiency of the vehicle 1000.

Although the embodiments of the present invention are illustrated and described above, it can be understood that the above embodiments are illustrative and should not be construed as limiting the present invention. Those skilled in the art can make changes, modifications, replacements and variations to the above embodiments, within the scope of the appended claims.

## Claims

1. A thermal management system (100), adapted to be applied in a vehicle (1000), wherein the thermal management system (100) comprises a cooling circuit (10), a thermostatic circuit (20), a heating circuit (30), and an expansion tank (40), wherein the cooling circuit (10), the thermostatic circuit (20), and the heating circuit (30) are all connected to the expansion tank (40), and the expansion tank (40) is configured for liquid-filling and air-exhausting of the cooling circuit (10), the thermostatic circuit (20), and the heating circuit (30); wherein the thermal management system (100) further comprises a first reversing valve (50) connected to the expansion tank (40), the cooling circuit (10), and the thermostatic circuit (20), wherein the first reversing valve (50) is configured to connect the cooling circuit (10) and the thermostatic circuit (20) in series in a filling and exhausting mode of the vehicle (1000); wherein the thermal management system (100) further comprises a first liquid-gas separator (60) connected to the expansion tank (40), the reversing valve, and the cooling circuit (10), wherein the first liquid-gas separator (60) is configured to separate liquid and air in the cooling circuit (10) and thermostatic circuit (20) and introduce the separated gas into the expansion tank (40);
wherein, when the cooling circuit (10) and the thermostatic circuit (20) are connected in series, the cooling circuit (10) is configured to absorb heat of a target cooling element (12) of the vehicle (1000) using the liquid, and the thermostatic circuit (20) is configured to heat a target thermostatic element (22) of the vehicle (1000) using the liquid with the absorbed heat of the target cooling element (12); and **characterized in that**, a heat dissipating device (14), a second reversing valve (18), and a first pump (16) are connected in the cooling circuit (10), wherein the first pump (16) is configured to drive the liquid to flow in the cooling circuit (10); the heat dissipating device (14) is connected to the second reversing valve (18), and the heat dissipating device (14) is configured to dissipate heat of the liquid; and the second reversing valve (18) is configured to keep the heat dissipating device (14) from being connected into the cooling circuit (10) when the cooling circuit (10) and the thermostatic circuit (20) are connected in series.

2. The thermal management system (100) according to claim 1, **characterized in that**, the thermal management system (100) comprises an air conditioning circuit (80), wherein the air conditioning circuit (80) is configured to exchange heat with the thermostatic circuit (20).

3. The thermal management system according to claim 2, **characterized in that**, a heat exchange device (24) and a second pump (26) are connected in the thermostatic circuit (20), wherein the second pump (26) is configured to drive the liquid to flow in the thermostatic circuit (20), and the heat exchange device (24) is configured to exchange heat with the air conditioning circuit (80).

4. The thermal management system according to claim 1, **characterized in that**, the thermal management system (100) comprises a cooling air-exhaust pipe (120), wherein the cooling air-exhaust pipe (120) connects the expansion tank (40) with the first liquid-gas separator (60), and the cooling air-exhaust pipe (120) is configured to introduce the air in the cooling circuit (10) into the expansion tank (40).

5. The thermal management system (100) according to claim 4, **characterized in that**, the thermostatic circuit (20) comprises a thermostatic water supply pipe (130) connecting the expansion tank (40) with the thermostatic circuit (20), wherein the thermostatic water supply pipe (130) is configured to provide the liquid for the thermostatic circuit (20), and the cooling air-exhaust pipe (120) is configured to introduce the air in the cooling circuit (10) and thermostatic circuit (20) into the expansion tank (40) when the cooling circuit (10) and the thermostatic circuit (20) are connected in series.

6. The thermal management system (100) according to claim 4, **characterized in that**, the thermostat circuit (20) and the cooling circuit (10) share the cooling air-exhaust pipe (120) for air-exhausting, when the cooling circuit (10) and the thermostatic circuit (20) are connected in series.

7. The thermal management system (100) according to any one of claims 1 and 4-6, **characterized in that**, the thermal management system (100) further comprises a cooling water supply pipe (110), wherein the cooling water supply pipe (110) connects the expansion tank (40) with the first liquid-gas separator (60), and the cooling water supply pipe (110) is configured to supply the liquid to the cooling circuit (10).

8. The thermal management system (100) according to claim 1, **characterized in that**, the thermal management system (100) comprises a second liquid-gas separator (90) connecting the heating circuit (30) with the expansion tank (40), wherein the second liquid-gas separator (90) is configured to separate liquid and air in the heating circuit (30) and introduce the separated gas into the expansion tank (40).

9. The thermal management system (100) according to claim 8, **characterized in that**, the heating circuit (30) comprises a heating water supply pipe (140) and a heating air-exhaust pipe (150), wherein the heating water supply pipe (140) connects the expansion tank (40) with the second liquid-gas separator (90) and is configured to supply the liquid to the heating circuit (30), and the heating air-exhaust pipe (150) connects the expansion tank (40) with the second liquid-gas separator (90) and is configured to introduce the air in the heating circuit (30) into the expansion tank (40).

10. A vehicle (1000), comprising:
a vehicle body (200)
**characterized in that** the vehicle (1000) further comprises the thermal management system (100) according to any one of claims 1 to 9,
wherein the thermal management system (100) is installed on the vehicle body (200).

## Patentansprüche

1. Wärmemanagementsystem (100), dafür eingerichtet, in einem Fahrzeug (1000) angewandt zu werden, wobei das Wärmemanagementsystem (100) einen Kühlkreis (10), einen Thermostatkreis (20), einen Heizkreis (30) und einen Expansionstank (40) umfasst, wobei der Kühlkreis (10), der Thermostatkreis (20) und der Heizkreis (30) alle mit dem Expansionstank (40) verbunden sind und der Expansionstank (40) dafür gestaltet ist, den Kühlkreis (10), den Thermostatkreis (20) und den Heizkreis (30) mit Flüssigkeit zu füllen und abzulüften, wobei das Wärmemanagementsystem (100) ferner ein erstes Umschaltventil (50) umfasst, das mit dem Expansionstank (40), dem Kühlkreis (10) und dem Thermostatkreis (20) verbunden ist,
wobei das erste Umschaltventil (50) dafür gestaltet ist, den Kühlkreis (10) und den Thermostatkreis (20) in Reihe in einen Füll- und Ablüftmodus des Fahrzeugs (1000) zu verbinden, wobei das Wärmemanagementsystem (100) ferner einen ersten Gas-Flüssigkeitsabscheider (60) umfasst, der mit dem Expansionstank (40), dem Umschaltventil und dem Kühlkreis (10) verbunden ist, wobei der erste Gas-Flüssigkeitsabscheider (60) dafür gestaltet ist, Flüssigkeit und Luft in dem Kühlkreis (10) und dem Thermostatkreis (20) zu scheiden und das abgeschiedene Gas in den Expansionstank (40) einzuführen,
wobei der Kühlkreis (10), wenn der Kühlkreis (10) und der Thermostatkreis (20) in Reihe verbunden sind, dafür konfiguriert ist, mit Hilfe der Flüssigkeit Wärme von einem Zielkühlelement (12) des Fahrzeugs (1000) zu absorbieren, und der Thermostatkreis (20) dafür konfiguriert ist, mit Hilfe der Flüssigkeit mit der absorbierten Wärme des Zielkühlelements (12) ein Zielthermostatelement (22) des Fahrzeugs (1000) zu erwärmen, und
**dadurch gekennzeichnet, dass** in dem Kühlkreis (10) eine
Wärmeableitungsvorrichtung (14), ein zweites Umschaltventil (18) und eine erste Pumpe (16) verbunden sind, wobei die erste Pumpe (16) dafür konfiguriert ist, die Flüssigkeit zum Fließen in dem Kühlkreis (10) anzutreiben, wobei die Wärmeableitungsvorrichtung (14) mit dem zweiten Umschaltventil (18) verbunden ist und die
Wärmeableitungsvorrichtung (14) dafür gestaltet ist, Wärme von der Flüssigkeit abzuleiten, und das zweite Umschaltventil (18) dafür gestaltet ist, die Wärmeableitungsvorrichtung (14) vor der Einbindung in den Kühlkreis (10) zu bewahren, wenn der Kühlkreis (10) und der Thermostatkreis (20) in Reihe verbunden sind.

2. Wärmemanagementsystem (100) nach Anspruch 1, **dadurch gekennzeichnet, dass** das Wärmemanagementsystem (100) einen Klimatisierungskreis (80) umfasst, wobei der Klimatisierungskreis (80) dafür gestaltet ist, mit dem Thermostatkreis (20) Wärme zu tauschen.

3. Wärmemanagementsystem nach Anspruch 2, **dadurch gekennzeichnet, dass** in dem Thermostatkreis (20) eine Wärmetauschvorrichtung (24) und eine zweite Pumpe (26) verbunden sind, wobei die zweite Pumpe (26) dafür gestaltet ist, die Flüssigkeit zum Fließen in dem Thermostatkreis (20) anzutreiben und die Wärmetauschvorrichtung (24) dafür gestaltet ist, mit dem Klimatisierungskreis (80) Wärme zu tauschen.

4. Wärmemanagementsystem nach Anspruch 1, **dadurch gekennzeichnet, dass** das Wärmemanagementsystem (100) eine Kühlungsluft-Ablüftungsleitung (120) umfasst, wobei die Kühlungsluft-Ablüftungsleitung (120) den Expansionstank (40) mit dem ersten Gas-Flüssigkeitsabscheider (60) verbindet und die Kühlungsluft-Ablüftungsleitung (120) dafür gestaltet ist, die Luft in dem Kühlkreis (10) in den Expansionstank (40) einzuführen.

5. Wärmemanagementsystem (100) nach Anspruch 4, **dadurch gekennzeichnet, dass** der Thermostatkreis (20) eine Thermostat-Wasserspeiseleitung (130) umfasst, die den Expansionstank (40) mit dem Thermostatkreis (20) verbindet, wobei die Thermostat-Wasserspeiseleitung (130) dafür gestaltet ist, die Flüssigkeit für den Thermostatkreis (20) bereitzustellen, und die Kühlungsluft-Ablüftungsleitung (120) dafür gestaltet ist, die Luft in dem Kühlkreis (10) und dem Thermostatkreis (20) in den Expansionstank (40) einzuführen, wenn der Kühlkreis (10) und der Thermostatkreis (20) in Reihe verbunden sind.

6. Wärmemanagementsystem (100) nach Anspruch 4, **dadurch gekennzeichnet, dass** der Thermostatkreis (20) und der Kühlkreis (10) die Kühlungsluft-Ablüftungsleitung (120) gemeinsam zum Ablüften nutzen, wenn der Kühlkreis (10) und der Thermostatkreis (20) in Reihe verbunden sind.

7. Wärmemanagementsystem (100) nach einem der Ansprüche 1 und 4 bis 6, **dadurch gekennzeichnet, dass** das Wärmemanagementsystem (100) ferner eine Kühlwasser-Speiseleitung (110) umfasst, wobei die Kühlwasser-Speiseleitung (110) den Expansionstank (40) mit dem ersten Gas-Flüssigkeitsabscheider (60) verbindet und die Kühlwasser-Speiseleitung (110) dafür gestaltet ist, die Flüssigkeit in den Kühlkreis (10) einzuspeisen.

8. Wärmemanagementsystem (100) nach Anspruch 1, **dadurch gekennzeichnet, dass** das Wärmemanagementsystem (100) einen zweiten Gas-Flüssigkeitsabscheider (90) umfasst, der den Heizkreis (30) mit dem Expansionstank (40) verbindet, wobei der zweite Gas-Flüssigkeitsabscheider (90) dafür gestaltet ist, Flüssigkeit und Luft in dem Heizkreis (30) zu scheiden und das abgeschiedene Gas in den Expansionstank (40) einzuführen.

9. Wärmemanagementsystem (100) nach Anspruch 8, **dadurch gekennzeichnet, dass** der Heizkreis (30) eine Heizwasser-Zufuhrleitung (140) und eine Heizluft-Ablüftungsleitung (150) umfasst, wobei die Heizwasser-Zufuhrleitung (140) den Expansionstank (40) mit dem zweiten Gas-Flüssigkeitsabscheider (90) verbindet und dafür gestaltet ist, die Flüssigkeit in den Heizkreis (30) einzuspeisen, und die Heizluft-Ablüftungsleitung (150) den Expansionstank (40) mit dem zweiten Gas-Flüssigkeitsabscheider (90) verbindet und dafür gestaltet ist, die Luft in dem Heizkreis (30) in den Expansionstank (40) einzuführen.

10. Fahrzeug (1000), Folgendes umfassend:
einen Fahrzeugaufbau (200),
**dadurch gekennzeichnet, dass** das Fahrzeug (1000) ferner das
Wärmemanagementsystem (100) nach einem der Ansprüche 1 bis 9 umfasst,
wobei das Wärmemanagementsystem (100) in dem Fahrzeugaufbau (200) installiert ist.

## Revendications

1. Système de gestion thermique (100), conçu pour être mis en oeuvre dans un véhicule (1000), le système de gestion thermique (100) comprenant un circuit de refroidissement (10), un circuit thermostatique (20), un circuit de chauffage (30), et un vase d'expansion (40), le circuit de refroidissement (10), le circuit thermostatique (20) et le circuit de chauffage (30) étant tous reliés au vase d'expansion (40), et le vase d'expansion (40) étant conçu pour le remplissage de liquide et l'évacuation d'air du circuit de refroidissement (10), du circuit thermostatique (20), et du circuit de chauffage (30) ; le système de gestion thermique (100) comprenant en outre une première vanne d'inversion (50) reliée au vase d'expansion (40), au circuit de refroidissement (10), et au circuit thermostatique (20),
la première vanne d'inversion (50) étant conçue pour relier le circuit de refroidissement (10) et le circuit thermostatique (20) en série dans un mode de remplissage et d'évacuation du véhicule (1000) ; le système de gestion thermique (100) comprenant en outre un premier séparateur liquide-gaz (60) relié au vase d'expansion (40), à la vanne d'inversion, et au circuit de refroidissement (10), le premier séparateur liquide-gaz (60) étant conçu pour séparer le liquide de l'air dans le circuit de refroidissement (10) et le circuit thermostatique (20) et introduire le gaz séparé dans le vase d'expansion (40) ;
dans lequel, quand le circuit de refroidissement (10) et le circuit thermostatique (20) sont reliés en série, le circuit de refroidissement (10) est conçu pour absorber de la chaleur d'un élément de refroidissement cible (12) du véhicule (1000) à l'aide du liquide, et le circuit thermostatique (20) est conçu pour chauffer un élément thermostatique cible (22) du véhicule (1000) à l'aide du liquide avec la chaleur absorbée de l'élément de refroidissement cible (12) ; et **caractérisé en ce qu'**un dispositif de dissipation de chaleur (14), une seconde vanne d'inversion (18), et une première pompe (16) sont reliés dans le circuit de refroidissement (10), la première pompe (16) étant conçue pour amener le liquide à s'écouler dans le circuit de refroidissement (10) ; le dispositif de dissipation de chaleur (14) est relié à la seconde vanne d'inversion (18), et le dispositif de dissipation de chaleur (14) est conçu pour dissiper la chaleur du liquide ; et la seconde vanne d'inversion (18) est conçue pour empêcher que le dispositif de dissipation de chaleur (14) soit relié au circuit de refroidissement (10) lorsque le circuit de refroidissement (10) et le circuit thermostatique (20) sont reliés en série.

2. Système de gestion thermique (100) selon la revendication 1, **caractérisé en ce que** le système de gestion thermique (100) comprend un circuit de climatisation (80), le circuit de climatisation (80) étant conçu pour échanger de la chaleur avec le circuit thermostatique (20).

3. Système de gestion thermique selon la revendication 2, **caractérisé en ce qu'**un dispositif d'échange de chaleur (24) et une seconde pompe (26) sont reliés dans le circuit thermostatique (20), la seconde pompe (26) étant conçue pour amener le liquide à s'écouler dans le circuit thermostatique (20), et le dispositif d'échange de chaleur (24) étant conçu pour échanger de la chaleur avec le circuit de climatisation (80).

4. Système de gestion thermique selon la revendication 1, **caractérisé en ce que** le système de gestion thermique (100) comprend un tuyau d'évacuation d'air de refroidissement (120), le tuyau d'évacuation d'air de refroidissement (120) étant relié au vase d'expansion (40) avec le premier séparateur liquide-gaz (60), et le tuyau d'évacuation d'air de refroidissement (120) étant conçu pour introduire l'air du circuit de refroidissement (10) dans le vase d'expansion (40).

5. Système de gestion thermique (100) selon la revendication 4, **caractérisé en ce que** le circuit thermostatique (20) comprend un tuyau d'alimentation en eau thermostatique (130) reliant le vase d'expansion (40) et le circuit thermostatique (20), le tuyau d'alimentation en eau thermostatique (130) étant conçu pour fournir le liquide destiné au circuit thermostatique (20), et le tuyau d'évacuation d'air de refroidissement (120) étant conçu pour introduire l'air du circuit de refroidissement (10) et du circuit thermostatique (20) dans le vase d'expansion (40) quand le circuit de refroidissement (10) et le circuit thermostatique (20) sont reliés en série.

6. Système de gestion thermique (100) selon la revendication 4, **caractérisé en ce que** le circuit thermostatique (20) et le circuit de refroidissement (10) partagent le tuyau d'évacuation d'air de refroidissement (120) destiné à l'évacuation d'air, quand le circuit de refroidissement (10) et le circuit thermostatique (20) sont reliés en série.

7. Système de gestion thermique (100) selon l'une quelconque des revendications 1 et 4 à 6, **caractérisé en ce que** le système de gestion thermique (100) comprend en outre un tuyau d'alimentation en eau de refroidissement (110), le tuyau d'alimentation en eau de refroidissement (110) étant relié au vase d'expansion (40) avec le premier séparateur liquide-gaz (60), et le tuyau d'alimentation en eau de refroidissement (110) étant conçu pour alimenter le liquide vers le circuit de refroidissement (10).

8. Système de gestion thermique (100) selon la revendication 1, **caractérisé en ce que** le système de gestion thermique (100) comprend un second séparateur liquide-gaz (90) reliant le circuit de chauffage (30) au vase d'expansion (40), le second séparateur liquide-gaz (90) étant conçu pour séparer le liquide de l'air dans le circuit de chauffage (30) et introduire le gaz séparé dans le vase d'expansion (40).

9. Système de gestion thermique (100) selon la revendication 8, **caractérisé en ce que** le circuit de chauffage (30) comprend un tuyau d'alimentation en eau de chauffage (140) et un tuyau d'évacuation d'air de chauffage (150), le tuyau d'alimentation en eau de chauffage (140) reliant le vase d'expansion (40) au second séparateur liquide-gaz (90) et étant conçu pour alimenter le liquide vers le circuit de chauffage (30), et le tuyau d'évacuation d'air de chauffage (150) reliant le vase d'expansion (40) au second séparateur liquide-gaz (90) et étant conçu pour introduire l'air du circuit de chauffage (30) dans le vase d'expansion (40).

10. Véhicule (1000), comprenant :
une carrosserie de véhicule (200),
**caractérisé en ce que** le véhicule (1000) comprend en outre le système de gestion thermique (100) selon l'une quelconque des revendications 1 à 9,
le système de gestion thermique (100) étant installé sur la carrosserie de véhicule (200).
